(19)

Europäisches
Patentamt
European
Patent Office
Office européen
des brevets

(11) **EP 2 608 550 A2**

(12) **EUROPEAN PATENT APPLICATION**

(43) Date of publication:
**26.06.2013 Bulletin 2013/26**

(51) Int Cl.:
***H04N 13/00*** *(2006.01)*

(21) Application number: **12008291.2**

(22) Date of filing: **12.12.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **23.12.2011 US 201161579669 P
20.05.2012 US 201213476008**

(71) Applicant: **MediaTek Inc.
Hsin-Chu (TW)**

(72) Inventors:
• **Cheng, Chao-Chung
Tainan City (TW)**
• **Chang, Te-Hao
Taipei City (TW)**
• **Liang, Chin-Chuan
Hsinchu City (TW)**

(74) Representative: **Hoefer & Partner
Pilgersheimer Straße 20
81543 München (DE)**

(54) **Disparity search methods and apparatuses for multi-view videos**

(57)    An embodiment of the invention provides a disparity search method for searching for a matching pixel block from a second image of a multi-view video. The matching pixel block corresponds to a given pixel block of a first image of the multi-view video; the first image and the second image are spatially adjacent to each other. First, a set of reference pixel blocks is selected from a set of reference images of the multi-view video to provide a set of reference disparity vectors. Then, a set of disparity vector predictors is prepared based on the set of reference disparity vectors, wherein the given pixel block's position and the set of disparity vector predictors define a set of candidate pixel blocks in the second image. Next, the set of candidate pixel blocks in the second image is searched for the matching pixel block.

FIG. 3

## Description

The invention relates generally to disparity search methods and apparatuses for multi-view videos according to pre-characterizing clauses of claims 1 and 10.

A multi-view video can have two or more spatially-adjacent images at each particular time. For example, at each particular time a stereo video (i.e. a multi-view video having two viewpoints) can include a right image of a right viewpoint and a left image of a left viewpoint. Each of the images can include a plurality of pixel blocks, each of which can contain a single pixel or multiple pixels. A pixel block in the right/left image may be exactly the same as or very similar to another pixel block in the left/right image. These two pixel blocks are frequently referred to as matching or corresponding pixel blocks; they represent the same part of a three-dimensional (3D) scene. The perceived distance that the part of the scene is away from the viewer is sometimes referred to as the "visual depth" of the part. Because different parts of the scene can have different visual depths, it will seem to the viewer that the stereo video as displayed is three-dimensional.

An electronic device that is responsible for processing a multi-view video may need to perform "disparity search" in order to find out pairs of matching pixel blocks from two spatially-adjacent images of the multi-view video. A vector that initiates from the position of a given pixel block in one of the two images and ends at the position of a matching pixel block in the other image can be referred to as a disparity vector of the given pixel block. For example, if the given pixel block is in a right image and the matching pixel block is in the left image, and the disparity vector is a zero vector, a viewer will perceive that the visual part represented by these two pixel blocks is on the screen. If the disparity vector points to the right, the viewer will perceive that the visual part is in front of, i.e. closer than, the screen. If the disparity vector points to the left, the viewer will perceive that the visual part is behind, i.e. farther than, the screen. Through disparity search, the electronic device tries to find out a disparity vector for each pixel block of an image.

Most conventional disparity search methods involve the use of motion vectors. These conventional methods are not optimal solutions because they frequently are complex and require excessive system resources.

This in mind, the present invention provide disparity search methods and disparity search apparatuses to reduce the computational complexity of and the amount of required system resources in disparity searches.

This is achieved by a disparity search method and a disparity search apparatus according to claims 1 and 10. The dependent claims pertain to corresponding further developments and improvements.

An embodiment of the invention provides a disparity search method for searching for a matching pixel block from a second image of a multi-view video. The matching pixel block corresponds to a given pixel block of a first image of the multi-view video; the first image and the second image are spatially adjacent to each other. First, a set of reference pixel blocks is selected from a set of reference images of the multi-view video to provide a set of reference disparity vectors. Then, a set of disparity vector predictors is prepared based on the set of reference disparity vectors, wherein the given pixel block's position and the set of disparity vector predictors define a set of candidate pixel blocks in the second image. Next, the set of candidate pixel blocks in the second image is searched for the matching pixel block.

An embodiment of the invention provides a disparity search apparatus for searching for a matching pixel block from a second image of a multi-view video. The matching pixel block corresponds to a given pixel block of a first image of the multi-view video; the first image and the second image are spatially adjacent to each other. The apparatus includes a disparity storage module and a disparity generation module. The disparity generation module includes a predictor generator and a disparity generator. The disparity storage module is configured to store determined disparity vectors of a set of reference images of the multi-view video. The predictor generator is coupled to the disparity storage module and is configured to select a set of reference pixel blocks from the set of reference images to provide a set of reference disparity vectors, and to prepare a set of disparity vector predictors based on the set of reference disparity vectors, wherein the given pixel block's position and the set of disparity vector predictors define a set of candidate pixel blocks in the second image. The disparity generator is coupled to the predictor generator and the disparity storage module and is configured to search the set of candidate pixel blocks in the second image for the matching pixel block.

An embodiment of the invention provides a disparity search method for searching for a matching pixel block from a second image of a multi-view video. The matching pixel block corresponds to a given pixel block of a first image of the multi-view video; the first image and the second image are spatially adjacent to each other. First, a set of reference pixel blocks is selected from a set of reference images of the multi-view video to provide a set of reference disparity vectors. The set of reference images are selected from a group including the first image, the second image, a previous image of the first image, and a previous image of the second image. Then, a set of disparity vector predictors is prepared based solely on the set of reference disparity vectors, wherein the given pixel block's position and the set of disparity vector predictors define a set of candidate pixel blocks in the second image. Next, only the set of candidate pixel blocks in the second image is searched for the matching pixel block.

In the following, the invention is further illustrated by way of example, taking reference to the accompanying drawings. Thereof

> FIG. 1 shows a schematic diagram of a multi-view video,
> FIG. 2 shows a block diagram of a disparity search apparatus according to an embodiment of the invention, and
> FIG. 3 shows a flowchart of a disparity search method according to an embodiment of the invention.

Embodiments of the invention provide methods and apparatuses for performing disparity searches on a multi-view video. One of the common characteristics shared by the embodiments is that the embodiments need not to use motion vectors associated with the multi-view video's content in the process of disparity searches. By disregarding (or not using) motion vectors, the embodiments can reduce the amount of required system resources and the complexity of computation. As a result, the embodiments can lower down the costs associated with disparity searches. Another advantage shared by the embodiment is that they use relatively good predictors to increase the efficiency of disparity searches.

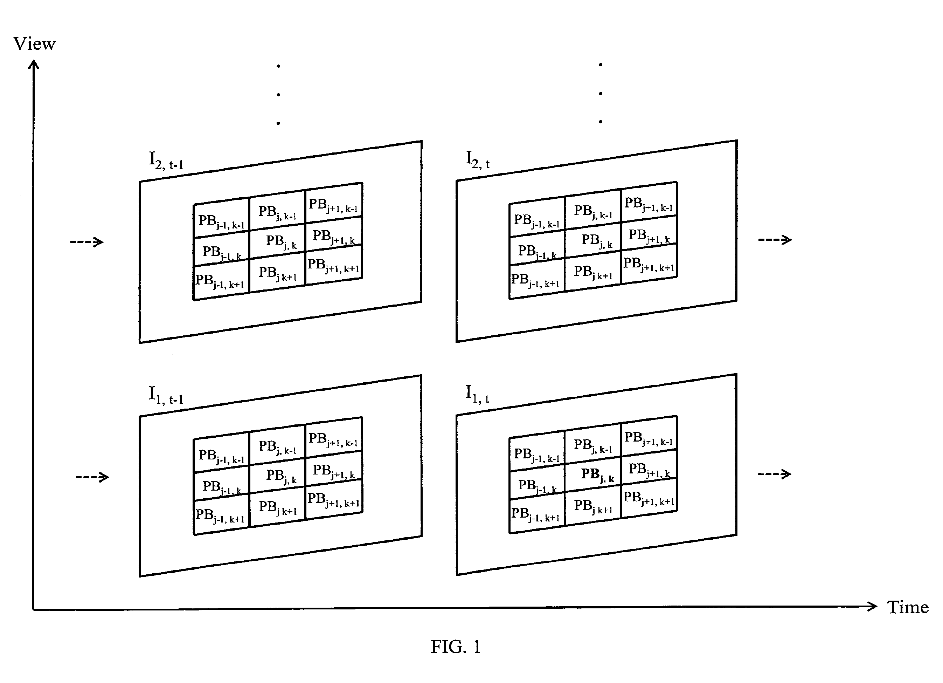

FIG. 1 shows a schematic diagram of a multi-view video, which can be processed by any of the embodiments of the invention. The horizontal axis and the vertical axis in this diagram represent a time axis and a view axis, respectively. This multi-view video has M views, where M is an integer equal to or larger than two. In other words, the multi-view video has at least a first view and a second view. For example, one of these two views is a right view while the other view is a left view.

At each particular time, the multi-view video can have an image on each of the M views. These M images can be referred to as spatially adjacent images; they represent a 3D scene at the particular time and can give different parts of the 3D scene different visual depths.

In the multi-view video, each image has $J \times K$ pixel blocks, where J and K are positive integers. Each of the pixel blocks can encompass only one pixel or multiple pixels. Hereinafter a pixel block that is horizontally the $j^{th}$ and vertically the $k^{th}$ in an image will be referred to as $PB_{j,k}$, where j is a positive integer smaller than or equal to J, and k is a positive integer smaller than or equal to K.

In FIG. 1, images $I_{1,t}$ and $I_{2,t}$ are the images any of the embodiments explained subsequently is currently performing disparity search for. The embodiment has already performed disparity search for the images before images $I_{1,t}$ and $I_{2,t}$, i.e. images on the left-hand side of images $I_{1,t}$ and $I_{2,t}$ in FIG. 1. Furthermore, the embodiment will soon perform disparity search for the images after images $I_{1,t}$ and $I_{2,t}$, i.e. images on the right-hand side of images $I_{1,t}$ and $I_{2,t}$ in FIG. 1.

When an embodiment is performing disparity search for images $I_{1,t}$ and $I_{2,t}$, the embodiment can make use of some useful information that is currently available. The useful information can include spatial ("S") information, multi-view (M) information, temporal (T) information, and multi-view temporal (MT) information. Specifically, if the embodiment is performing disparity search for a given pixel block $PB_{j,k}$ in images $I_{1,t}$, the S information includes reference disparity vectors selected from the disparity vectors that have already been determined for the pixel blocks in image $I_{1,t}$ itself; the M information includes reference disparity vectors selected from the disparity vectors that have already been determined for the pixel blocks in image $I_{2,t}$; the T information includes reference disparity vectors selected from the disparity vectors that have already been determined for the pixel blocks in image $I_{1,t-1}$; the MT information includes reference disparity vectors selected from the disparity vectors that have already been determined for the pixel blocks in image $I_{2,t-1}$. On the other hand, if the embodiment is performing disparity search for a given pixel block in images $I_{2,t}$, the aforementioned S information, M information, T information, and MT information will become M information, S information, MT information, and T information, respectively.

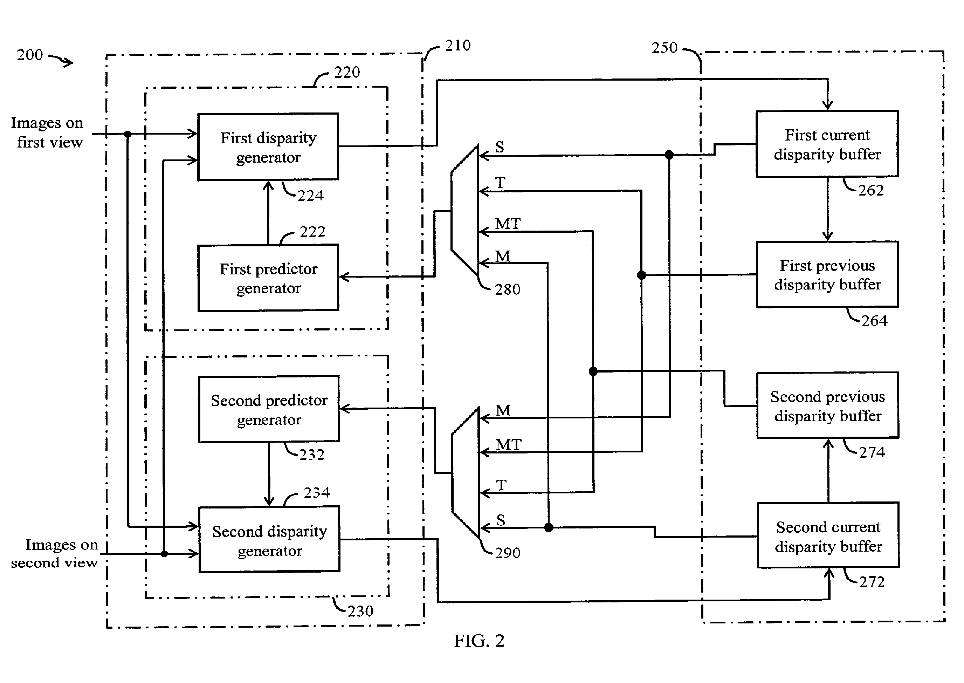

FIG. 2 shows a block diagram of a disparity search apparatus 200 according to an embodiment of the invention. The disparity search apparatus 200 includes a disparity generation module 210, a disparity storage module 250, a first multiplexer 280, and a second multiplexer 290. Simply speaking, the disparity generation module 210 includes a first disparity generation module 220 for generating disparity vectors for images on the first view of the multi-view video, and a second disparity generation module 230 for generating disparity vectors for images on the second view of the multi-view video. The first disparity generation module 220 includes a first predictor generator 222 and a first disparity generator 224. The second disparity generation module 230 includes a second predictor generator 232 and a second disparity generator 234.

Although the disparity search apparatus 200 shown in FIG. 2 has a symmetric structure, other disparity search apparatuses according to other embodiments of the invention can have asymmetric structures. For example, one such embodiment can use a different disparity generation module to replace the second disparity generation module 230 of FIG. 2. This replacement module can generate disparity vectors for images on the second view of the multi-view video using a method different from the method used by the first disparity generation module 220.

The disparity storage module 250 stores the disparity vectors generated by the disparity generation module 210. Specifically, the disparity storage module 250 of this embodiment has four buffers, including a first current disparity buffer 262, a first previous disparity buffer 264, a second current disparity buffer 272, and second previous disparity buffer 274. These four buffers may constitute different sections of a single piece of memory or belong to different pieces of memory.

Because the disparity generation module 210 is currently performing disparity search for images $I_{1, t}$ and $I_{2, t}$, the first current disparity buffer 262 currently stores the disparity vectors that the disparity generation module 210 has already determined for some pixel blocks in image $I_{1, t}$. These already-determined disparity vectors constitute a candidate pool that the first disparity generation module 220 can fetch S information from and the second disparity generation module 230 can fetch M information from. The first previous disparity buffer 264 currently stores the disparity vectors that the disparity generation module 210 has already determined for the pixel blocks in image $I_{1, t-1}$. These disparity vectors constitute a candidate pool that the first disparity generation module 220 can fetch T information from and the second disparity generation module 230 can fetch MT information from. The second current disparity buffer 272 currently stores the disparity vectors that the disparity generation module 210 has already determined for some pixel blocks in image $I_{2, t}$. These disparity vectors constitute a candidate pool that the second disparity generation module 230 can fetch S information from and the first disparity generation module 220 can fetch M information from. The second previous disparity buffer 274 currently stores the disparity vectors that the disparity generation module 210 has already determined for the pixel blocks in image $I_{2, t-1}$. These disparity vectors constitute a candidate pool that the second disparity generation module 230 can fetch T information from and the first disparity generation module 220 can fetch MT information from.

The first multiplexer 280 provides at least one type of the four types of information stored in the disparity storage module 250 to the first disparity generation module 220, and hence is coupled to at least one of the four buffers of the disparity storage module 250. If the first disparity generation module 220 needs only one type of information from the disparity storage module 250, the first multiplexer 280 may be omitted. The second multiplexer 290 provides at least one type of the four types of information stored in the disparity storage module 250 to the second disparity generation module 230, and hence is coupled to at least one of the four buffers of the disparity storage module 250. If the second disparity generation module 230 needs only one type of information from the disparity storage module 250, the second multiplexer 290 may be omitted.

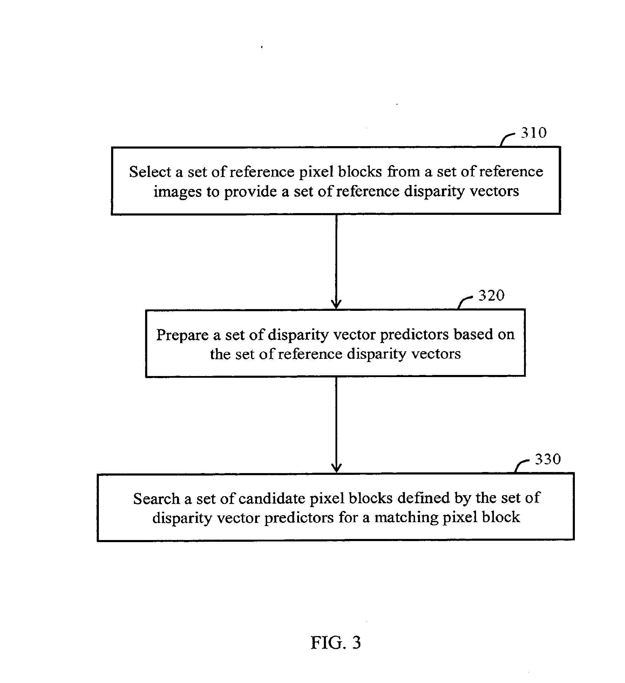

FIG. 3 shows a flowchart of a disparity search method according to an embodiment of the invention. This method can be performed by, for example, the first disparity generation module 220 and the second disparity generation module 230 shown in FIG. 2. In order to explain the steps clearly, in the following paragraphs it will be assumed that it's the first disparity generation module 220 shown in FIG. 2 that is performing the method shown in FIG. 3.

Specifically, the flowchart shown in FIG. 3 includes the steps that the first disparity generation module 220 can perform to generate a disparity vector $DV_{j, k}$ for a given pixel block $PB_{j, k}$ in image $I_{1, t}$. If $DV_{j, k} = (a, b)$, where a and b are integers, it can be said that the given pixel block $PB_{j, k}$ in image $I_{1, t}$ matches or corresponds to pixel block $PB_{j+a, k+b}$ in image $I_{2, t}$. In other words, pixel block $PB_{j, k}$ in image $I_{1, t}$ and pixel block $PB_{j+a, k+b}$ in image $I_{2, t}$ are matching or corresponding pixel blocks that represent the same part of a scene at time t and give the part a visual depth.

At step 310, the first predictor generator 222 selects a set of reference pixel blocks from a set of reference images to provide a set of reference disparity vectors. As used in this disclosure, a set can include zero, one, or multiple members. Taking the set of reference images as an example, it can include only one or multiple reference images. Similarly, the set of reference pixel blocks can include only one or multiple pixel blocks, and the set of reference disparity vectors can include only one or multiple reference disparity vectors.

The set of reference images can include image $I_{1, t}$ itself, image $I_{1, t-1}$, image $I_{2, t}$, and/or image $I_{2, t-1}$ Image $I_{1, t-1}$ and image $I_{2, t-1}$ are previous images of images $I_{1, t}$ and $I_{2, t}$, respectively.

The reference pixel blocks have positions that are either the same as or very close to the position of the given pixel block $PB_{j, k}$. In addition, each of the reference pixel blocks has an already-determined disparity vector. Because of the spatial vicinity, these reference pixel blocks' disparity vectors should be able to serve as good predictors of the undetermined disparity vector of the given pixel block $PB_{j, k}$.

The set of reference pixel blocks can include an S subset of reference pixel blocks selected from an S reference window in image $I_{1, t}$ itself, an M subset of reference pixel blocks selected from an M reference window in image $I_{2, t}$, a T subset of reference pixel blocks selected from a T reference window in image $I_{1, t-1}$, and an MT subset of reference pixel blocks selected from an MT reference window in image $I_{2, t-1}$. For example, the S reference window can be defined as:

$$\{PB_{x, y}: (j-j1) <= x <= (j+j2), (k-k1) <= y <= (k+k2),$$ where x and y are positive integers, and j1, j2, k1, and k2 are non-negative integers.}

If j1, j2, k1, and k2 are all equal to one, the S reference window is a square that encompasses nine pixel blocks, including $PB_{j-1, k-1}$, $PB_{j, k-1}$, $PB_{j+1, k-1}$, $PB_{j-1, k}$, $PB_{j, k}$, $PB_{j+1, k}$, $PB_{j-1, k+1}$, $PB_{j, k+1}$, and $PB_{j+1, k+1}$ of image $I_{1, t}$. But pixel block $PB_{j, k}$ of image $I_{1, t}$ should not be a member of the S subset of reference pixel blocks because this pixel block's disparity vector remains undetermined at this moment. Similarly, pixel blocks $PB_{j+1, k}$, $PB_{j-1, k+1}$, $PB_{j, k+1}$, and $PB_{j+1, k+1}$ of image $I_{1, t}$ may be excluded from the S subset of reference pixel blocks if these four pixel blocks' diversity vectors also remain undetermined at this moment.

As another example, the S reference window can be defined as:

> {$PB_{x, y}$: |x-j| + |y-k| <= p1, where x and y are positive integers, and p1 is a non-negative integer.}

In the above definition, |x-j| and |y-k| represent the absolute values of (x-j) and (y-k), respectively. If p1 is equal to one, the S reference window is a cross that encompasses five pixel blocks, including $PB_{j, k-1}$, $PB_{j-1, k}$, $PB_{j, k}$, $PB_{j+1, k}$, and $PB_{j, k+1}$, of image $I_{1, t}$. But pixel blocks $PB_{j, k}$, $PB_{j+1, k}$, and $PB_{j, k+1}$, of image $I_{1, t}$ may not be members of the S subset of reference pixel blocks if these pixel blocks' disparity vectors remain undetermined at this moment.

The reference pixel blocks selected from the S reference windows are adjacent to the given pixel block $PB_{j, k}$. The disparity vectors of this S subset of reference pixel blocks are stored in the first current disparity buffer 262 and constitute the aforementioned S information available to the first disparity generation module 220.

The M reference window can have a definition that is the same as or similar to the definition of the S reference window. Leaving the difference in view aside, the reference pixel blocks selected from the M reference window are either at the same position as or very close to the given pixel block $PB_{j, k}$ in image $I_{1, t}$. The disparity vectors of this M subset of reference pixel blocks are stored in the second current disparity buffer 272 and constitute the aforementioned M information available to the first disparity generation module 220.

The T reference window can have a definition that is the same as or similar to the definition of the S reference window. Leaving the difference in time aside, the reference pixel blocks selected from the T reference window are either at the same position as or very close to the given pixel block $PB_{j, k}$ in image $I_{1, t}$. The disparity vectors of this T subset of reference pixel blocks are stored in the first previous disparity buffer 264 and constitute the aforementioned T information available to the first disparity generation module 220.

The MT reference window can have a definition that is the same as or similar to the definition of the S reference window. Leaving the differences in time and in view aside, the reference pixel blocks selected from the MT reference window are either at the same position as or very close to the given pixel block $PB_{j, k}$ in image $I_{1, t}$. The disparity vectors of this MT subset of reference pixel blocks are stored in the second previous disparity buffer 274 and constitute the aforementioned MT information available to the first disparity generation module 220.

If the set of reference pixel blocks include L members, where L is a positive integer, the set of reference disparity vectors may have L or less than L members. This is because some of the L reference pixel blocks may have identical reference disparity vectors.

Next, at step 320, the first predictor generator 222 prepares a set of disparity vector predictors for the first disparity generator 224 based on the set of reference disparity vectors. The set of disparity vector predictors may be prepared based solely on the set of reference disparity vectors and without referring to any of the multi-view video's motion vectors. For example, if the set of reference disparity vectors includes a vector (a, b), where a and b are integers, the first predictor generator 222 can derive a subset of the set of disparity vector predictors based on vector (c, d), where (c, d) = (a, b) if reference vector (a, b) is provided by a reference pixel block in image $I_{1, t}$ or $I_{1, t-1}$, and (c, d) = (-a, -b) if reference vector (a, b) is provided by a reference pixel block in image $I_{2, t}$ or $I_{2, t-1}$. The disparity vector predictor (c, d) can be referred to as an S predictor, an M predictor, a T predictor, or an MT predictor if it's derived based on a reference disparity vector (a, b) provided by a reference pixel block in image $I_{1, t}$, $I_{2, t}$, $I_{1, t-1}$, or $I_{2, t-1}$. Furthermore, in the subset of disparity vector predictors derived based on vector (a, b), the ones that are not equal to (c, d) can be referred to as R predictors because they are refinements of vector (c, d).

For example, based on vector (c, d), the first predictor generator 222 can derive the following subset of disparity vector predictors:

> {(x, y): |x-c| + |y-d| <= q1, where x and y are integers, and q1 is a non-negative integer.}

If q1 is equal to one, this subset of disparity vector predictors will include (c, d-1), (c-1, d), (c, d), (c+1, d), and (c, d+1), wherein the four predictors other than (c, d) are R predictors. This subset of disparity vector predictors and the given pixel block's position (j, k) will define a search window in image $I_{2, t}$; the search window is a cross that encompasses five pixel blocks, including $PB_{j+c, k+d-1}$, $PB_{j+c-1, k+d}$, $PB_{j+c, k+d}$, $PB_{j+c+1, k+d}$, and $PB_{j+c, k+d+1}$, of image $I_{2, t}$.

As another example, based on vector (c, d), the first predictor generator 222 can derive the following subset of disparity vector predictors:

> {(x, y): (c-q2) <= x <= (c+q3), (d-q4) <= y <= (d+q5), where x and y are positive integers, and q2, q3, q4, and q5 are non-negative integers.}

If q2, q3, q4, and q5 are all equal to one, this subset of disparity vector predictors will include (c-1, d-1), (c, d-1), (c+1, d-1), (c-1, d), (c, d), (c+1, d), (c-1, d+1), (c, d+1), and (c+1, d+1), wherein the eight predictors other than (c, d) are R predictors. This subset of disparity vector predictors and the given pixel block's position (j, k) will define a search window in image $I_{2, t}$; the search window is a square that encompasses nine pixel blocks, including $PB_{j+c-1, k+d-1}$, $PB_{j+c, k+d-1}$, $PB_{j+c+1, k+d-1}$, $PB_{j+c-1, k+d}$, $PB_{j+c, k+d}$, $PB_{j+c+1, k+d}$, $PB_{j+c-1, k+d+1}$, $PB_{j+c, k+d+1}$, and $PB_{j+c+1, k+d+1}$ in image $I_{2, t}$.

If the set of reference disparity vectors has P different members, the set of disparity vector predictors can have Q different members, where P and Q are positive integers and Q can be different from P. The Q members of the set of disparity vector predictors and the position of the given pixel block $PB_{j,k}$ in image $I_{1,t}$ defines a set of Q candidate pixel blocks in image $I_{2,t}$ for the first disparity generator 224 to search for the matching pixel block of the given pixel block. The Q candidate pixel blocks in image $I_{2,t}$ can belong to P different search windows in image $I_{2,t}$. The P search windows can have different sizes and different shapes and any two of them can overlap with each other.

The set of disparity vector predictors may also include a disparity vector predictor that is, for example, a mean, a weighted mean, a median, or a mode of some or all of members of the set of reference disparity vectors.

At step 330, the first disparity generator 224 searches the set of candidate pixel blocks in image $I_{2,t}$ for the matching pixel block of the given pixel block $PB_{j,k}$ in image $I_{1,t}$. For example, at step 330 the first disparity generator 224 may search only the set of candidate pixel blocks and neglect other pixel blocks in image $I_{2,t}$. If the matching pixel block's position is (x1, y1), where x1 and y1 are positive integers, the given pixel block $PB_{j,k}$'s disparity vector will be (x1-j, y1-k).

At step 330, the first disparity generator 224 can assign each of the set of candidate pixel blocks at least a matching cost, and then compare the matching costs in order to select the matching pixel block from the candidate pixel blocks. For example, the first disparity generator 224 can select the candidate pixel block having the smallest matching cost as the given pixel block's matching pixel block in image $I_{2,t}$.

To facilitate step 330, the first disparity generator 224 can assign each candidate pixel block a matching cost that is equal to the sum of a similarity cost and a candidate type cost. The similarity cost can be a value that indicates the similarity between the candidate pixel block in image $I_{2,t}$ and the given pixel block in image $I_{1,t}$; the more similar the two pixel blocks are to each other, the smaller the similarity cost will be. To name a few examples, the first disparity generator 224 can calculate the similarity cost using sum of absolute difference (SAD), sum of square difference (SSD), or census transformation.

The candidate type cost can be a value that indicates whether the candidate pixel block is of a relatively more reliable type or a relatively less reliable type; the more reliable the type is, the smaller the candidate type cost will be. For example, for a candidate pixel block that is selected based on an S predictor, a T predictor, an M predictor, an MT predictor, or an R predictor, the first disparity generator 224 can assign the candidate pixel block a candidate type cost of Cs, $C_T$, $C_M$, $C_{MT}$, or $C_R$, respectively, where $C_S$, $C_T$, $C_M$, $C_{MT}$, or $C_R$ can have different predetermined values. Because S predictors and T predictors may be more reliable than M predictors and MT predictors, and R predictors may be the least reliable ones, the order of $C_S$, $C_T$, $C_M$, $C_{MT}$, and $C_R$ in terms of their magnitudes may be as follows:

$$C_S < C_T < C_M < C_{MT} < C_R$$

Because a candidate pixel block may be selected repetitively based on multiple types of predictors, the first disparity generator 224 may assign the candidate pixel block multiple candidate type costs. As a result, the candidate pixel block may have multiple matching costs. Among these matching costs, only the smallest one will affect whether the first disparity generator 224 will select this candidate pixel block as the matching pixel block.

Through steps 310 and 320, the first predictor generator 222 efficiently gives the first disparity generator 224 some good candidate positions to perform disparity search. The first predictor generator 222 does so while disregarding (i.e. not referring to) any motion vectors associated with the multi-view video's content. In other words, the embodiments do not involve the uses of motion vectors. As a result, no motion estimation is needed. Because motion estimation requires much system resources and complicated computation, it's a great advantage that the embodiments of the invention do not involve motion estimation or motion vectors. Furthermore, the embodiments of the invention does not require storage spaces for buffering motion vectors, which may be relatively larger pieces of data when being compared with disparity vectors. Another advantage of step 310 and 320 is that they allow regular data access. Specifically, using steps 310 and 320, the first predictor generator 222 will access each of the four buffers of the disparity storage module 250 orderly rather than irregularly.

Furthermore, because the candidate positions provided by the first predictor generator 222 tends to be very good guesses, at step 330 the first disparity generator 224 may be able to search for the matching pixel block quickly and efficiently.

The embodiments of the invention may have several useful applications. To name a few examples, the embodiments may be used to determine the visual depth of a visual object, to allow the visual depth to be adjusted, to provide useful information for gesture recognition, or to allow additional view(s) to be interpolated or extrapolated.

In the foregoing detailed description, the invention has been described with reference to specific exemplary embodiments thereof. It will be evident that various modifications may be made thereto without departing from the scope of the invention as set forth in the following claims. The detailed description and drawings are, accordingly, to be regarded in an illustrative sense rather than a restrictive sense.

**Claims**

1. A method of searching for a matching pixel block from a second image of a multi-view video, the matching pixel block corresponding to a given pixel block of a first image of the multi-view video, the first image and the second image being spatially adjacent to each other, the method **characterized by**:

selecting a set of reference pixel blocks from a set of reference images of the multi-view video to provide a set of reference disparity vectors; preparing a set of disparity vector predictors based on the set of reference disparity vectors, wherein the given pixel block's position and the set of disparity vector predictors define a set of candidate pixel blocks in the second image; and searching the set of candidate pixel blocks in the second image for the matching pixel block.

2. The method of claim 1, **characterized in that** the set of reference images are selected from a group consisting of the first image, the second image, a previous image of the first image, and a previous image of the second image.

3. The method of claim 2, **characterized in that** the set of disparity vector predictors is prepared based solely on the set of reference disparity vectors; and only the set of candidate pixel blocks in the second image is searched for the matching pixel block.

4. The method of claim 1, **characterized in that** the step of selecting the set of reference pixel blocks from the set of reference images comprises:

from one of the set of reference images, selecting pixel block(s) from a reference window in the reference image to make up a subset of the set of reference pixel blocks, wherein the reference window encompasses the given pixel block's position.

5. The method of claim 1, **characterized in that** the step of preparing the set of disparity vector predictors based on the set of reference disparity vectors comprises:

based on one of the set of reference disparity vectors, including a subset of disparity vector predictors into the set of disparity vector predictors so that the subset of disparity vector predictors and the given pixel block's position define a search window in the second image.

6. The method of claim 1, **characterized in that** the step of searching the set of candidate pixel blocks in the second image for the matching pixel block comprises:

assigning each of the candidate pixel blocks at least one matching cost; and

selecting the matching pixel block from the candidate pixel blocks by comparing the candidate pixel blocks' matching costs.

7. The method of claim 1, **characterized in that** the method does not involve the use of motion vectors.

8. The method of claim 1, **characterized in that** the method further comprises:

abstaining from performing motion estimations for the multi-view video.

9. The method of claim 1, **characterized in that** the set of disparity vector predictors are prepared without referring to any of the multi-view video's motion vectors.

10. An apparatus (200) for searching for a matching pixel block from a second image of a multi-view video, the matching pixel block corresponding to a given pixel block of a first image of the multi-view video, the first image and the second image being spatially adjacent to each other, the apparatus (200) **characterized by**:

a disparity storage module (250), configured to store determined disparity vectors of a set of reference images of the multi-view video; and a disparity generation module (210, 220, 230), comprising:

a predictor generator (222, 232), coupled to the disparity storage module (250), configured to select a set of reference pixel blocks from the set of reference images to provide a set of reference disparity vectors, and to prepare a set of disparity vector predictors based on the set of reference disparity vectors, wherein the given pixel block's position and the set of disparity vector predictors define a set of candidate pixel blocks in the second image; and a disparity generator (224, 234), coupled to the predictor generator (222, 232) and the disparity storage module (250), configured to search the set of candidate pixel blocks in the second image for the matching pixel block.

11. The apparatus (200) of claim 10, **characterized in that** the set of reference images are selected from a group consisting of the first image, the second image, a previous image of the first image, and a previous image of the second image.

12. The apparatus (200) of claim 10, **characterized in that** the predictor generator (222, 232) is configured to:

    select pixel block(s) from a reference window in one of the set of reference images to make up a subset of the set of reference pixel blocks, wherein the reference window encompasses the given pixel block's position.

**13.** The apparatus (200) of claim 10, **characterized in that** the predictor generator (222, 232) is configured to:

    based on one of the set of reference disparity vectors, include a subset of disparity vector predictors into the set of disparity vector predictors so that the subset of disparity vector predictors and the given pixel block's position define a search window in the second image.

**14.** The apparatus (200) of claim 10, **characterized in that** the disparity generator (224, 234) is configured to:

    assign each of the candidate pixel blocks at least one matching cost; and
    select the matching pixel block from the candidate pixel blocks by comparing the candidate pixel blocks' matching costs.

**15.** The apparatus (200) of claim 10, **characterized in that** the predictor generator (222, 232) is configured to prepare the set of disparity vector predictors without referring to any of the multi-view video's motion vectors.

FIG. 1

EP 2 608 550 A2

FIG. 2

EP 2 608 550 A2

EP 2 608 550 A2

```
                                                            ┌─ 310
  ┌────────────────────────────────────────────────────┐
  │   Select a set of reference pixel blocks from a set of reference│
  │     images to provide a set of reference disparity vectors     │
  └────────────────────────────────────────────────────┘
                            │
                            │
                            ▼                  ┌─ 320
  ┌────────────────────────────────────────────────────┐
  │    Prepare a set of disparity vector predictors based on     │
  │          the set of reference disparity vectors             │
  └────────────────────────────────────────────────────┘
                            │
                            │
                            ▼                  ┌─ 330
  ┌────────────────────────────────────────────────────┐
  │    Search a set of candidate pixel blocks defined by the set of │
  │         disparity vector predictors for a matching pixel block │
  └────────────────────────────────────────────────────┘
```

FIG. 3